# EUROPÄISCHE PATENTSCHRIFT

(11) **EP 2 634 469 B1**
(45) Veröffentlichungstag und Bekanntmachung des Hinweises auf die Patenterteilung: **24.08.2016**
(21) Anmeldenummer: 12001434.5
(22) Anmeldetag: 02.03.2012
(51) Int. Cl.: F16L 21/03, F16J 15/10

(54) **Verfahren zur Herstellung eines Dichtrings.**
Method for manufacturing a sealing ring.
Procédé de fabrication une bague d'étanchéité.

(43) Veröffentlichungstag der Anmeldung: 04.09.2013
(73) Patentinhaber: DS Dichtungstechnik GmbH, 48301 Nottuln (DE)
(72) Erfinder: Steinhoff, Albert, 48301 Nottuln (DE); Kloppenburg, Ingo, 48301 Nottuln (DE); Wellenbrock, Klaus, 48301 Nottuln (DE); Kuhlage, Henrik, 48231 Warendorf-Milte (DE)
(74) Vertreter: Grünecker Patent- und Rechtsanwälte PartG mbB

(56) Entgegenhaltungen:
- EP-A1- 1 837 576
- EP-A2- 1 477 718
- EP-A2- 1 571 386
- US-A1- 2010 059 940

## Beschreibung

Die vorliegende Erfindung betrifft ein Verfahren zur Herstellung eines Dichtrings, der zwischen einem Spitzende und einer Glockenmuffe von zwei Steckmuffen verbundenen Betonrohre anzuordnen ist und einen aus einem extrudierten Dichtungsmaterial gebildeten Dichtungskörper umfasst.

Ein solcher Dichtring ist beispielsweise aus der EP 1 326 309 bekannt und dient der Abdichtung von gefügten Betonrohren. Der Dichtring ist aber üblicherweise durch Vergießen des Betons bevorzugt an der Glockenmuffe des entsprechenden Rohres befestigt.

Die EP 1 477 718 A2 offenbart einen Dichtring, der zwischen einem Spitzende und einer Glockenmuffe von zwei steckmuffenverbundenen Betonrohren anzuordnen ist. Der Dichtring weist einen aus extrudiertem Dichtungsmaterial gebildeten Dichtungskörper auf, der einen aus einem ersten Dichtungsmaterial gebildeten und eine Anlagefläche für ein abzudichtendes Ende eines anzulegenden Betonrohres ausformenden Dichtungsabschnitt und einen radial beabstandet dazu liegenden Stützabschnitt aus einem zweiten Dichtungsmaterial ausbildet. Dabei kann das zweite Dichtungsmaterial ein billiger Kunststoff, beispielsweise ein recycelter Kunststoff sein und beispielsweise aus PVC oder PE bzw. TPE bestehen.

Die vorliegende Erfindung will ein besonders wirtschaftliches Verfahren zur Herstellung eines Dichtrings angeben.

Zur Lösung dieses Problems wird für die vorliegende Erfindung ein Verfahren zur Herstellung eines Dichtrings mit den Merkmalen von Anspruch 1 angegeben. Der mit dem erfindungsgemäßen Verfahren hergestellte Dichtring hat eine Anlagefläche für ein Ende eines anzulegenden Betonrohres, d. h. eines gegen den Dichtring beim Fügen der Rohre anzulegenden Rohres. Dieses Ende ist regelmäßig das Spitzende, wenn der Dichtring mit der Glockenmuffe vergossen ist. Die Anlagefläche wird durch einen Dichtungsabschnitt gebildet. Dieser Dichtungsabschnitt ist aus einem ersten Dichtungsmaterial gebildet. Als Anlagefläche in diesem Sinn gilt jeder Flächenbereich, der nach dem Fügen der Betonrohre als Fläche des Dichtrings an dem in den Dichtring eingeschobenen Spitzende des Betonrohres dichtend anliegt. Wesentlich ist dabei eine Abdichtung in radialer Richtung. Die Anlagefläche kann aber auch an dem vorderen Ende des Dichtrings vorgesehen sein, welcher stirnseitig an einer vorderen Ringfläche des anzulegenden Betonrohres nach dem Fügen der Rohre liegt, vorzugsweise daran anliegt. Der erfindungsgemäß hergestellte Dichtring hat des Weiteren einen Stützabschnitt. Dieser Stützabschnitt ist aus einem zweiten Material gebildet, welches sich dadurch auszeichnet, dass es einen Füllstoffanteil aus Kunststoffrezyklat enthält.

Der mit dem erfindungsgemäßen Verfahren hergestellte Dichtring bietet den Vorteil, dass die Anlagefläche und damit der Dichtungsabschnitt relativ dünnwandig ausgebildet werden kann. Das erste Dichtungsmaterial ist dabei üblicherweise jungfräuliches Material, d. h. Rohmaterial, welches noch nicht extrudiert worden ist. Dieses Material kann auch die Matrix des zweiten Dichtungsmaterials bilden, das das Kunststoffrezyklat enthält. Dieses Kunststoffrezyklat wird regelmäßig in der Matrix als Füllstoffanteil dispergiert und gleichmäßig verteilt. Aufgrund des Rezyklatanteils hat das Dichtungsmaterial - sofern für sich extrudiert - eine relativ raue Oberfläche und eignet sich nicht zur Abdichtung gegenüber dem Spitzende. So sollte der Stützabschnitt von einem dünnwandigen Dichtungsabschnitt radial innen oder außen überzogen sein, um dort die gewünschte Abdichtung zu bewirken. Jenseits dessen kann der Dichtring nahezu vollständig aus dem zweiten Dichtungsmaterial bestehen.

Gemäß der vorliegenden Erfindung ist der Füllstoffanteil durch granuliertes Rezyklat eines Elastomers gebildet. Dieses Elastomer ist vorzugsweise identisch mit dem ersten Dichtungsmaterial. Dabei ist weiterhin zu bevorzugen, dass das erste Dichtungsmaterial identisch mit dem Matrixwerkstoff des zweiten Dichtungsmaterials ist, was die Lagerhaltung vereinfacht.

Der erfindungsgemäß hergestellte Dichtring lässt sich dementsprechend durch geschredderte Abfälle auch herstellen, die beispielsweise beim Anfahren von Extrusionsstrecken für die Herstellung von Dichtringen anfallen. Nach dem heutigen Stand der Technik werden derartige Anfälle entsorgt und anderweitig verarbeitet. Die erfindungsgemäße Weiterbildung bietet die Möglichkeit, diesen im Prozess entstehenden Abfall bei der Herstellung von Dichtringen wieder zu verwenden und diesen jedenfalls teilweise als Werkstoff für die Herstellung des Dichtrings einzusetzen. Dabei kann das eingesetzte Rezyklat auch an anderen Produktionsstraßen anfallen als an derjenigen zur erfindungsgemäßen Herstellung des Dichtrings. Das Rezyklat kann ein- und mehrfach rezykliert sein. So kann das Rezyklat geschredderter Abfall aus der Herstellung eines erfindungsgemäßen Dichtrings sein.

Praktische Versuche haben gezeigt, dass der Füllstoffanteil eine maximale Korngröße von 500 µm, besonders bevorzugt von 300 µm, nicht überschreiten sollte. Sofern der Füllstoffanteil aus granuliertem Rezyklat besteht, wird diese regelmäßig aus vereisten Produktionsabfällen gewonnen, die geschreddert werden. Es hat sich gezeigt, dass eine Feinkornfraktion insofern keine Probleme begründet. Vielmehr aber sollte darauf geachtet werden, dass die zuvor angegebene maximale Korngröße nicht überschritten wird. Die durch Sieben zurückgehaltene Grobkornfraktion oberhalb der oberern Korngröße wird erneut vereist und geschreddert.

Gemäß einer bevorzugten Weiterbildung der vorliegenden Erfindung haben das erste Dichtungsmaterial, ein die zuvor genannte Matrix des zweiten Dichtungsmaterials ausbildender Matrixwerkstoff bzw. das Rezyklat eine Härte Shore-A von 40 bis 60. Es hat sich als vorteilhaft erwiesen, die Shore-A-Härte des Rezyklats um nicht mehr als 30 % von der Shore-A-Härte des ersten Dichtungsmaterial abweichen zu lassen.

Der Füllstoffanteil sollte vorzugsweise nicht höher als 40 Vol.-% sein. Der übrige Volumenanteil des zweiten Dichtungsmaterials wird regelmäßig durch den Matrixwerkstoff allein gebildet. Es hat sich als besonders vorteilhaft erwiesen, den Füllstoffanteil auf zwischen 5 und 30 Vol.-% festzulegen. Insbesondere bei der Verwendung von Rezyklat in dem o. a. Korngrößenbereich hat sich ein Volumenanteil von über 30 % als problematisch im Hinblick auf eine gleichmäßige Benetzung und Durchmischung im Einzugbereich des Extruders bzw. eines vorgeschalteten Knetwerkzeugs erwiesen. Bei einem Volumenanteil von unter 5 % ergibt sich kein substanzieller Vorteil gegenüber einer Mischung ohne Füllstoffanteil.

Der den Füllstoffanteil enthaltende Stützabschnitt kann sich im Wesentlichen radial erstreckende Stützstege umfassen, die rückseitig von der Anlagefläche abgehen und in eine Stützfläche übergehen. Diese Stützfläche bildet üblicherweise eine Formfläche aus, gegen welche das Betonmaterial der Glockenmuffe formbar ist. Mit anderen Worten liegt die Stützfläche an der radial äußeren Umfangsfläche des Dichtrings frei.

Bei einer alternativen bevorzugten Ausgestaltung kann der Stützabschnitt einen Kern ausbilden, der von dem ersten Dichtungsmaterial umhüllt ist. Der Kern kann selbst mit radialen Stützstegen ausgeformt sein, die rückseitig von der Anlagefläche abgehen. Diese Stützstege können auch nur teilweise aus dem ersten Dichtungsmaterial und teilweise aus dem zweiten Dichtungsmaterial gebildet sein. Die konkrete Ausgestaltung des Dichtrings im Hinblick auf die Ausformung des Stützabschnittes einerseits und des Dichtungsabschnittes andererseits steht im Belieben des Fachmannes. Es werden solche Gestaltungen bevorzugt, die sich leicht mittels Koextrusion herstellen lassen können, sodass der Dichtring mit den verschiedenen Abschnitten einfach mittels Extrusion hergestellt werden kann.

In an sich bekannter Weise hat der Dichtring einen oder mehrere Verankerungsfüße zum Eingriff in das Betonmaterial der Glockenmuffe. Dabei kann beispielsweise ein Verankerungsfuß von der Formfläche abragen, d. h. durch das zweite Dichtungsmaterial gebildet sein. Gemäß einer bevorzugten Weiterbildung ist des Weiteren der Anlagefläche in Einführrichtung vorgelagert ein Rampenabschnitt vorgesehen, welcher aus dem ersten Dichtungsmaterial gebildet ist und eine abgeschrägte Rampenfläche ausformt, an der das Spitzende beim Fügen der Betonrohre abgleiten kann, um das Spitzende koaxial zu der Glockenmuffe auszurichten. Ein solcher Rampenabschnitt ist allgemein bekannt, beispielsweise aus der EP 1 332 309 B1. Der Rampenabschnitt kann aus dem ersten Dichtungsmaterial gebildet sein. Er kann gleichwohl auch aus dem zweiten Dichtungsmaterial gebildet sein. Von dem Rampenabschnitt ragt vorzugsweise wenigstens ein Verankerungsfuß ab, der beim Vergießen des Betonmaterials von diesem umhüllt und nach Aushärten des Betonmaterials in diesem im Eingriff ist, um den Dichtungsring darin zu verankern. Gemäß einer weiteren bevorzugten Ausgestaltung der vorliegenden Erfindung ist an dem in Einführrichtung vorderen Ende des Dichtungsabschnitts wenigstens ein Verankerungsfuß zum Eingriff in das Betonmaterial abragend vorgesehen.

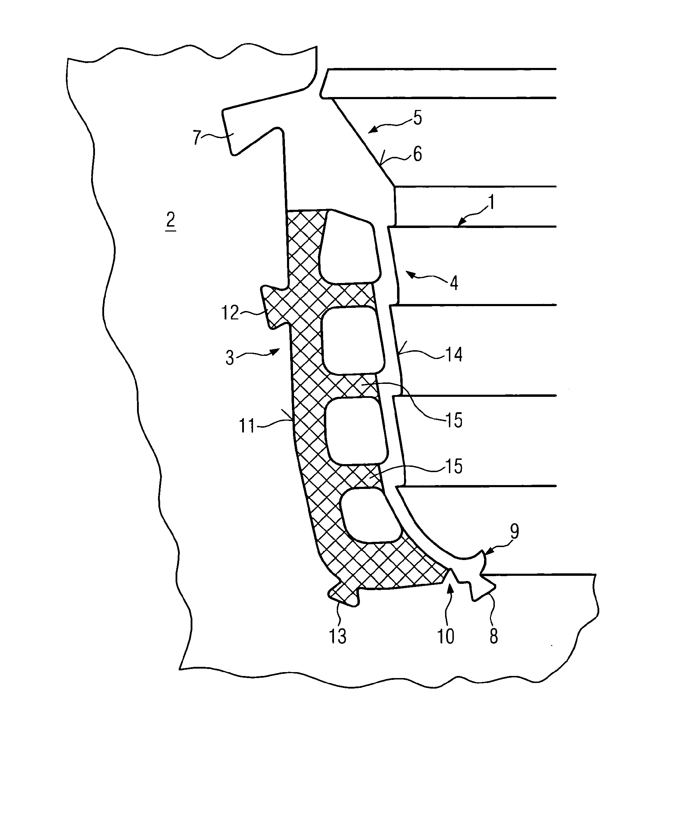

Weitere Einzelheiten und Vorteile der vorliegenden Erfindung ergeben sich aus der nachfolgenden Beschreibung eines Ausführungsbeispiels in Verbindung mit der Zeichnung, die eine Querschittsansicht durch das in eine Glockenmuffe eingebaute Ausführungsbeispiel des Dichtrings zeigt.

In der Zeichnung kennzeichnet Bezugszeichen 1 das Ausführungsbeispiel eines Dichtrings, welcher durch Vergießen von Betonmaterial mit einer Glockenmuffe 2 befestigt ist. Der Dichtring 1 hat einen Stützabschnitt 3 und einen Dichtungsabschnitt 4, die aus unterschiedlichen Materialien gebildet sind. Der Stützabschnitt 3 ist aus einem zweiten Dichtungsmaterial gebildet, der Dichtungsabschnitt aus einem ersten Dichtungsmaterial. Das erste Dichtungsmaterial formt auch einen Rampenabschnitt 5 aus, der in Einführrichtung dem Dichtungsabschnitt 4 vorgelagert ist und eine schräg geneigte Rampenfläche 5 ausformt. An dem in Einführrichtung vorderen Ende hat der Dichtring 2 einen dem Rampenabschnitt 5 zugeordneten ersten Verankerungsfuß 7. Dieser erste Verankerungsfuß 7 wird wie ein vierter Verankerungsfuß 8, der in Einführrichtung an einem vorderen Ende 9 des Dichtungsabschnitts 4 vorgesehen ist, aus dem ersten Dichtungsmaterial gebildet. Dieses vordere Ende 9 ist über eine Einkerbung 10 von dem Stützabschnitt 3 beabstandet. Der Stützabschnitt 3 bildet eine Formfläche 11 aus, gegen welche das Betonmaterial der Glockenmuffe 2 geformt wird. Diese Formfläche 11 wird von einem zweiten und einem dritten Verankerungsfuß 12, 13 überragt, die in dem Betonmaterial der Glockenmuffe 2 im Eingriff sind. Zwischen der Formfläche 11 und einer durch den Dichtungsabschnitt 4 gebildeten konturierten Anlagefläche 14 erstrecken sich in radialer Richtung mehrere Stützstege 15, die aus dem zweiten Dichtungsmaterial gebildet sind und an den ersten Dichtungsabschnitt 4 angeschlossen sind. Dieser Dichtungsabschnitt 4 ist jedenfalls auf Höhe des Stützabschnitts 3 als dünnwandige Schicht ausgeformt.

Wie die in der Zeichnung gezeigte Schnittansicht verdeutlicht, besteht das Ausführungsbeispiel in etwa zur Hälfte aus dem zweiten Dichtungsmaterial, welches einen Füllstoffanteil aus rezykliertem Material des ersten Dichtungsmaterials enthält. Lediglich die mit dem einzuführenden Spitzende in Kontakt kommende, radial innen liegende Innenumfangsfläche besteht aus jungfräulichem Elastomer. Dementsprechend kann das gezeigte Ausführungsbeispiel kostengünstig hergestellt werden.

### Bezugszeichenliste

- 1: Dichtring
- 2: Glockenmuffe
- 3: Stützabschnitt
- 4: Dichtungsabschnitt
- 5: Rampenabschnitt
- 6: Rampenfläche
- 7: erster Verankerungsfuß
- 8: vierter Verankerungsfuß
- 9: vorderes Ende
- 10: Einkerbung
- 11: Formfläche
- 12: zweiter Verankerungsfuß
- 13: dritter Verankerungsfuß
- 14: Anlagefläche
- 15: Stützsteg

## Patentansprüche

1. Verfahren zur Herstellung eines Dichtrings (1) mit wenigstens einem aus einem extrudierten Dichtungsmaterial gebildeten Dichtungskörper, wobei der Dichtring (1) zwischen einem Spitzende und einer Glockenmuffe (2) von zwei steckmuffenverbundenen Betonrohren anzuordnen ist,
und einem aus einem ersten Dichtungsmaterial gebildeten und eine Anlagefläche (14) für ein abzudichtendes Ende eines anzulegenden Betonrohres ausformenden Dichtungsabschnitt (4) und einen radial beabstandet dazu liegenden Stützabschnitt (3) aus einem zweiten Dichtungsmaterial umfasst,
**dadurch gekennzeichnet,**
**dass** dem zweiten Dichtungsmaterial als Füllstoffanteil granuliertes Rezyklat eines Elastomers des ersten und/oder des zweiten Dichtungsmaterials beigegeben wird, das dadurch gewonnen wurde, dass bei der vorangehenden Herstellung von Dichtringen als Abfall anfallendes Material der Dichtringe geschreddert worden ist.

2. Verfahren zur Herstellung eines Dichtrings (1) nach Anspruch 1, **dadurch gekennzeichnet, dass** der Füllstoffanteil eine maximale Korngröße von 500 µm, bevorzugt von 300 µm nicht überschreitet.

3. Verfahren zur Herstellung eines Dichtrings (1) nach Anspruch 1 oder 2, **dadurch gekennzeichnet, dass** das Rezyklat, das erste Dichtungsmaterial und ein Matrixwerkstoff des zweiten Dichtungsmaterials eine Härte Shore-A von zwischen 40 und 60 haben.

4. Verfahren zur Herstellung eines Dichtrings (1) nach Anspruch 3, **dadurch gekennzeichnet, dass** die Shore-A-Härte des Rezyklats von der Shore-A-Härte des ersten Dichtungsmaterial um zwischen 0% und 30% abweicht.

5. Verfahren zur Herstellung eines Dichtrings (1) nach einem der vorherigen Ansprüche, **dadurch gekennzeichnet, dass** der Füllstoffanteil nicht mehr als 40 Vol.-% beträgt.

6. Verfahren zur Herstellung eines Dichtrings (1) nach Anspruch 5, **dadurch gekennzeichnet, dass** der Füllstoffanteil zwischen 5 Vol.-% und 30 Vol.-% liegt.

7. Verfahren zur Herstellung eines Dichtrings (1) nach einem der vorherigen Ansprüche, **dadurch gekennzeichnet, dass** der Stützabschnitt (3) sich im wesentlichen radial erstreckende Stützstege (15) umfasst, die rückseitig von der Anlagefläche (14) abgehen und in eine Stützfläche (11) übergehen.

8. Verfahren zur Herstellung eines Dichtrings (1) nach einem der Ansprüche 1 bis 7, **dadurch gekennzeichnet, dass** der Stützabschnitt (3) eine Formfläche (11) ausbildet, gegen welche das Betonmaterial der Glockenmuffe (2) formbar ist.

9. Verfahren zur Herstellung eines Dichtrings (3) nach Anspruch 8, **dadurch gekennzeichnet, dass** von der Formfläche (11) wenigstens ein Verankerungsfuß (12, 13) zum Eingriff in das Betonmaterial abragt.

10. Verfahren zur Herstellung eines Dichtrings (1) nach einem der Ansprüche 1 bis 6, **dadurch gekennzeichnet, dass** der Stützabschnitt (3) einen Kern ausbildet, der von dem ersten Dichtungsmaterial umhüllt ist.

11. Verfahren zur Herstellung eines Dichtrings (1) nach einem der vorherigen Ansprüche, **gekennzeichnet durch** einen in Einführrichtung der Anlagefläche (14) vorgelagerten Rampenabschnitt (5), der aus dem ersten Dichtungsmaterial gebildet ist.

12. Verfahren zur Herstellung eines Dichtrings (1) nach Anspruch 11, **dadurch gekennzeichnet, dass** von dem Rampenabschnitt (5) wenigstens ein Verankerungsfuß (7) zum Eingriff in das Betonmaterial abragt.

13. Verfahren zur Herstellung eines Dichtrings (1) nach einem der vorherigen Ansprüche, **dadurch gekennzeichnet, dass** an dem in Einführrichtung vorderen Ende (9) des Dichtungsabschnitts (4) wenigstens ein Verankerungsfuß (8) zum Eingriff in das Betonmaterial abragt.

## Claims

1. Method for producing a sealing ring (1) comprising at least one sealing body made of an extruded sealing material, the sealing ring (1) being intended to be arranged between a pointed end and a bell socket (2) of two plug-socket-connected concrete pipes, and comprising a sealing portion (4) and which is made of a first sealing material and forms a contact surface (14) for an end that is to be sealed of a concrete pipe that is to be positioned, and a support portion (3) that is radially spaced apart from said sealing portion and is made of a second sealing material,
**characterised in that**
the second sealing material is added to the granulated recyclate of an elastomer of the first and/or the second sealing material as the filler component, which recyclate has been obtained **in that** the sealing ring material produced as waste during the earlier production of sealing rings has been shredded.

2. Method for producing a sealing ring (1) according to claim 1, **characterised in that** the filler component does not exceed a maximum grain size of 500 µm, preferably of 300 µm.

3. Method for producing a sealing ring (1) according to either claim 1 or claim 2, **characterised in that** the recyclate, the first sealing material and a matrix material of the second sealing material have a Shore A hardness of between 40 and 60.

4. Method for producing a sealing ring (1) according to claim 3, **characterised in that** the Shore A hardness of the recyclate differs from the Shore A hardness of the first sealing material by between 0 % and 30 %.

5. Method for producing a sealing ring (1) according to any of the preceding claims, **characterised in that** the filler component is no greater than 40 vol.%.

6. Method for producing a sealing ring (1) according to claim 5, **characterised in that** the filler component is of between 5 vol.% and 30 vol.%.

7. Method for producing a sealing ring (1) according to any of the preceding claims, **characterised in that** the support portion (3) comprises support ribs (15) which extend substantially radially and which branch off behind the contact surface (14) and transition into a support surface (11).

8. Method for producing a sealing ring (1) according to any of claims 1 to 7, **characterised in that** the support portion (3) forms a shaped surface (11), against which the concrete material of the bell socket (2) can be moulded.

9. Method for producing a sealing ring (3) according to claim 8, **characterised in that** at least one anchoring foot (12, 13) projects from the shaped surface (11) in order to engage in the concrete material.

10. Method for producing a sealing ring (1) according to any of claims 1 to 6, **characterised in that** the support portion (3) forms a core which is surrounded by the first sealing material.

11. Method for producing a sealing ring (1) according to any of the preceding claims, **characterised by** a ramp portion (5) which is upstream of the contact surface (14) in the insertion direction and is made from the first sealing material.

12. Method for producing a sealing ring (1) according to claim 11, **characterised in that** at least one anchoring foot (7) projects from the ramp portion (5) in order to engage in the concrete material.

13. Method for producing a sealing ring (1) according to any of the preceding claims, **characterised in that** at least one anchoring foot (8) projects on the end (9) of the sealing portion (4) which is at the front in the insertion direction, in order to engage in the concrete material.

## Revendications

1. Procédé de fabrication d'une bague ou d'un anneau d'étanchéité (1) comprenant au moins un corps de joint d'étanchéité formé par un matériau d'étanchéité extrudé, l'anneau d'étanchéité (1) étant à agencer entre l'extrémité ou about mâle en pointe et un manchon en cloche (2) de deux tuyaux de canalisation en béton reliés par emmanchement réciproque de manchonnage, et comprenant également un tronçon d'étanchéité (4), qui est réalisé en un premier matériau d'étanchéité et qui forme une surface d'appui (14) pour une extrémité à rendre étanche d'un tuyau de canalisation en béton à y appliquer, ainsi qu'un tronçon de support (3) en un deuxième matériau d'étanchéité, situé à distance radiale du tronçon précédent,
**caractérisé**
**en ce qu'**au deuxième matériau d'étanchéité est additionné en guise de fraction de substance de charge, du matériau recyclé sous forme de granulés, d'un élastomère du premier et/ou du deuxième matériau d'étanchéité, qui a été obtenu grâce à un déchiquetage et broyage de matériau de déchet d'anneaux d'étanchéité, lors d'une fabrication précédente d'anneaux d'étanchéité.

2. Procédé de fabrication d'un anneau d'étanchéité (1) selon la revendication 1, **caractérisé en ce que** la fraction de substance de charge ne dépasse pas une grosseur de grain maximale de 500 *µ*m, de préférence de 300 *µ*m.

3. Procédé de fabrication d'un anneau d'étanchéité (1) selon la revendication 1 ou la revendication 2, **caractérisé en ce que** le matériau recyclé, le premier matériau d'étanchéité et une matière formant matrice du deuxième matériau d'étanchéité ont une dureté Shore A entre 40 et 60.

4. Procédé de fabrication d'un anneau d'étanchéité (1) selon la revendication 3, **caractérisé en ce que** la dureté Shore A du matériau recyclé diffère de la dureté Shore A du premier matériau d'étanchéité d'une valeur entre 0% et 30%.

5. Procédé de fabrication d'un anneau d'étanchéité (1) selon l'une des revendications précédentes, **caractérisé en ce que** la fraction de substance de charge n'est pas supérieure à 40% en volume.

6. Procédé de fabrication d'un anneau d'étanchéité (1) selon la revendication 5, **caractérisé en ce que** la fraction de substance de charge se situe entre 5% en volume et 30% en volume.

7. Procédé de fabrication d'un anneau d'étanchéité (1) selon l'une des revendications précédentes, **caractérisé en ce que** le tronçon de support (3) comprend des nervures de support (15) s'étendant sensiblement de manière radiale, qui sont issues du côté arrière de la surface d'appui (14) et se transforment en une surface de support (11).

8. Procédé de fabrication d'un anneau d'étanchéité (1) selon l'une des revendications 1 à 7, **caractérisé en ce que** le tronçon de support (3) réalise une surface de forme (11) contre laquelle peut être moulé le matériau de béton du manchon en cloche (2).

9. Procédé de fabrication d'un anneau d'étanchéité (1) selon la revendication 8, **caractérisé en ce que** de la surface de forme (11) fait saillie au moins un pied d'ancrage (12, 13) destiné à venir en prise par encastrement dans le matériau de béton.

10. Procédé de fabrication d'un anneau d'étanchéité (1) selon l'une des revendications 1 à 6, **caractérisé en ce que** le tronçon de support (3) forme un noyau ou une âme, qui est enveloppé par le premier matériau d'étanchéité.

11. Procédé de fabrication d'un anneau d'étanchéité (1) selon l'une des revendications précédentes, **caractérisé par** un tronçon en rampe inclinée (5), qui est situé en amont de la surface d'appui (14) en se référant à la direction d'insertion, et qui est réalisé dans le premier matériau d'étanchéité.

12. Procédé de fabrication d'un anneau d'étanchéité (1) selon la revendication 11, **caractérisé en ce que** du tronçon en rampe inclinée (5) fait saillie au moins un pied d'ancrage (7) destiné à venir en prise par encastrement dans le matériau de béton.

13. Procédé de fabrication d'un anneau d'étanchéité (1) selon l'une des revendications précédentes, **caractérisé en ce que** de l'extrémité (9) du tronçon d'étanchéité (4) située à l'avant dans la direction d'insertion, fait saillie au moins un pied d'ancrage (8) destiné à venir en prise par encastrement dans le matériau de béton.
